# EUROPEAN PATENT SPECIFICATION

(11) **EP 2 923 548 B1**
(45) Date of publication and mention of the grant of the patent: **07.12.2016**
(21) Application number: 14305431.0
(22) Date of filing: 26.03.2014
(51) Int. Cl.: A01D 34/416

(54) **Cutting monofilament for a vegetation cutting machine and process of manufacturing such a monofilament**
Schneidmonofilament für eine Maschine zum Schneiden von Vegetation und Verfahren zur Herstellung eines derartigen Monofilaments
Mono-filament coupant pour machine de découpe de végétaux et procédé de fabrication d'un tel mono-filament

(43) Date of publication of application: 30.09.2015
(73) Proprietor: Speed France S.A.S., 69400 Arnas (FR)
(72) Inventor: Legrand, Emmanuel, 01240 Saint Germain Sur Renon (FR)
(74) Representative: Regimbeau

(56) References cited:
- EP-A1- 2 492 304
- US-A- 5 687 482

## Description

### FIELD OF THE INVENTION

The invention relates to a cutting monofilament for a vegetation cutting machine such as a brush cutter or an edge trimmer and to a manufacturing process of such a monofilament.

### BACKGROUND OF THE INVENTION

In vegetation cutting machines, such as brush cutters or edge trimmers, a cutting monofilament is releasably attached to a cutting head and the cutting head is caused to rotate at a high speed by a motor.

In use, the monofilament tends to extend substantially radially from the cutting head due to centrifugal forces.

Such monofilaments are typically made of a synthetic material, preferably a thermoplastic material, usually belonging to the family of polyamides.

Several problems arise from the use of such monofilaments.

First, the monofilaments are subjected to high stress due to the impact with the vegetation to be cut and thus may present a limited durability, which causes the user to frequently replace the monofilament.

Besides, the rotation of the monofilament may generate an important noise, which is not comfortable for the user and the people in the surroundings.

Patent US 5,687,482 describes a twisted monofilament intended to reduce the noise level. Such a monofilament has a constant polygonal cross-section whose position varies continuously along the longitudinal axis of the monofilament. Said monofilament is manufactured using an extrusion machine comprising a die having the same cross-section as the monofilament. The monofilament is drawn from said die and then twisted and deformed in a permanent way by heating. Said monofilament is made of a single material.

In addition, it may be useful to use different materials in the monofilament in order to benefit from the specific mechanical properties of each material, e.g. to improve at the same time flexibility and durability of the monofilament.

When different materials are used as a mixture, it is difficult to obtain a good homogeneity of the mixture, in particular due to the different configurations and lengths of the polymer chains of each material.

Hence, the monofilament obtained from such a mixture may not have homogeneous mechanical properties and thus a variable cutting efficiency depending on the considered position along its longitudinal axis.

Document EP 2 492 304 discloses a cutting filament having a circular cross section with a central core and an outer skin surrounding the core made of a material different from the material of the core.

### BRIEF DESCRIPTION OF THE INVENTION

A goal of the invention is thus to provide a monofilament that comprises at least two materials and that ensures that the mechanical properties of the monofilament are substantially identical whatever the position along the longitudinal axis of the monofilament.

To that end, a first object of the invention is a cutting monofilament for a vegetation cutting machine such as a brush cutter or an edge trimmer, having a cross-section comprising at least two portions made of thermoplastic materials having different mechanical properties, said cross-section being constant along a longitudinal axis of the monofilament, wherein each of said portions has a continuously varying position along said longitudinal axis of the monofilament and the arrangement of each portion relative to the cross-section is constant along said longitudinal axis.

By monofilament is meant a filament formed of a single thread and not an assembly of several fibers.

Color variation of a thermoplastic material is not considered to alter the mechanical properties of the material. In other words, if two portions of a monofilament are made of the same material but only differ by the color of the material, they are considered to be made of materials having different chemical compositions but the same mechanical properties.

According to an embodiment, the cross-section comprises at least three portions arranged side by side within the cross-section of the monofilament.

The limit between two adjacent portions in the cross-section of the monofilament may be substantially linear.

According to an embodiment, the position of each portion of the cross-section varies relative to the longitudinal axis of the monofilament by a constant angle by unit of length of the monofilament.

The period of variation of the position of each portion of the cross-section relative to the longitudinal axis of the monofilament is typically greater than 40 mm.

According to an embodiment, the cross-section has a polygonal shape comprising from four to eight edges.

For example, the monofilament has a square cross-section and the portions are arranged so as to form respective stripes parallel to a side of the cross-section.

Such a monofilament is twisted along its longitudinal axis and the angle of variation of the position of each portion of the cross-section is equal to the twisting angle of the monofilament.

According to another embodiment, the cross-section has a round shape.

Typically, the area of the cross-section of the monofilament is equal to the cross-section of a round monofilament having a diameter comprised between 1.35 and 4 mm.

Advantageously, at least one of the portions comprises a polyamide or a copolyamide.

According to an embodiment, a portion of the cross-section comprises PA 6/6 and another portion of the cross-section comprises PA 6-6/6.

According to an embodiment, a portion of the cross-section comprises polylactic acid (PLA) or a mixture comprising a polyamide, a polyolefin and a prodegradant agent including a stearate of a transition metal.

According to an embodiment, at least one portion of the cross-section comprises aramid or para-aramid polymer particles.

According to a second aspect, the invention provides a process of manufacturing such a monofilament.

Said process comprises:
- providing a rotating extrusion head comprising a die having the same cross-section as the monofilament and causing said die to rotate;
- feeding said extrusion head with a respective material of each of the portions of the cross-section of the monofilament, through respective inlets so as to arrange, in a cross-section of the die, said portions of the cross-section of the monofilament;
- drawing the monofilament from said die, the rotation of the die causing the position of each portion of the cross-section to vary continuously along the longitudinal axis of the monofilament.

### BRIEF DESCRIPTION OF THE DRAWINGS

Additional features and advantages of the invention will be apparent from the detailed description that follows, in reference with appended drawings wherein:
- Figure 1A and 1B show a perspective view of an embodiment of a cutting monofilament according to the invention having a square cross-section;
- Figures 2A and 2B show a perspective view of an embodiment of a cutting monofilament according to the invention having a round cross-section.

### DETAILED DESCRIPTION OF THE INVENTION

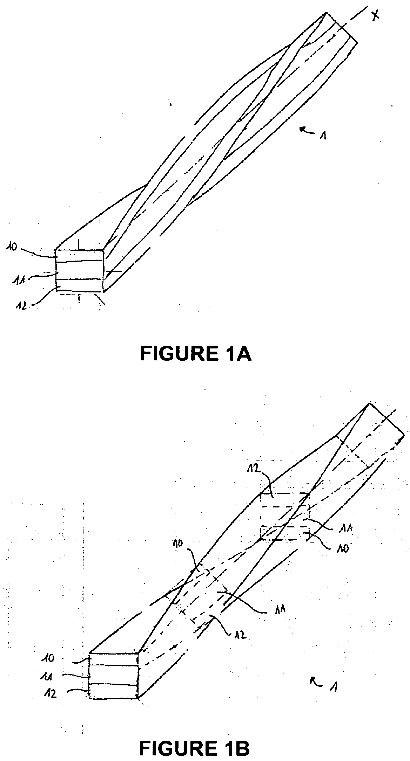

Figure 1A and 1B illustrates a cutting monofilament 1 according to an embodiment of the invention. Figure 1A shows the outer surface of the monofilament while Figure 1B comprises sectional views showing different positions of the cross-section along the longitudinal axis X.

In Figures 1A and 1B, the monofilament has a square cross-section but the invention more generally encompasses polygonal cross-sections having more than four edges, preferably having from four to eight edges. For example, the cross-section may have a star shape, a pentagonal shape, a hexagonal shape.

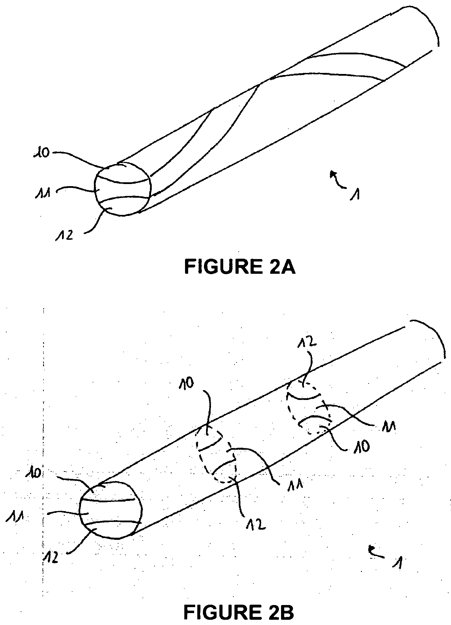

Figure 2 illustrates a cutting monofilament 1 according to another embodiment of the invention, said monofilament having a round cross-section. Figure 2A shows the outer surface of the monofilament while Figure 2B comprises sectional views showing different positions of the cross-section along the longitudinal axis X.

A polygonal cross-section may be preferred due to the presence of the edges that improve the cutting efficiency of the monofilament for dry vegetation; a round cross-section may usually be preferred to cut fleshy vegetation.

As shown in Figures 1A-1B and 2A-2B, the cross-section of the monofilament comprises three portions 10, 11, 12 that are arranged side by side so as to form parallel stripes.

Preferably, when the cross-section is square as shown in Figures 1A-1B, said stripes are parallel to a side of the square. In this way, it is possible to provide to said side and to the opposite side different materials and thus different mechanical properties.

These stripes may have the same width (i.e. each portion has a width that is equal to 1/3 of the width of the cross-section); otherwise, the stripes may have different widths - for example, the central portion 11 may be wider than the two outer portions 10, 12.

At least two of portions 10, 11, 12 are made of different thermoplastic materials, i.e. materials having different mechanical properties.

For example, each portion 10, 11, 12 is made of a material different from the material of each other portion.

Alternatively, one portion (e.g. the central portion 11) may be made of a first material and the two other portions (e.g. portions 10 and 12 that are arranged on both sides of portion 11) are both made of a second material that is different from the first one.

Usually, cutting monofilaments are made of polyamide (i.e. a homopolymer) or copolyamide (i.e. a copolymer).

The material of each portion can thus typically be selected from polyamides (e.g. PA 6, PA 6/6, PA 6/12 or PA 6/11) and copolyamides (e.g. PA 6-6/6), possibly reinforced by a suitable filler.

The material of each portion may be selected based on the desired properties to be imparted to the respective portion.

For example, to impart flexibility to a given portion, PA 6-6/6 (which is a copolymer) may be preferred, whereas PA 6/6 (which is a homopolymer) may be preferred in view of increasing hardness and durability to the respective portion.

The structure of the monofilament can thus be adjusted for optimizing the properties of the cutting monofilament.

According to an embodiment, the monofilament comprises a central portion made of an oxo-biodegradable material, such as a composition comprising a polyamide, a polyolefin, a prodegradant agent and a compatibilization agent, as described in patent application EP 2 492 304 in the name of the Applicant, and two outer portions made of PA6 or PA6-6/6. In the oxo-biodegradable composition, the polyolefin comprises advantageously low-density polyethylene (LDPE). The prodegradant agent comprises advantageously a stearate of a transition metal, e.g. iron stearate, manganese stearate and/or cobalt stearate. The composition advantageously also comprises a compatibilization agent to provide compatibility of the polyamide and the polyolefin. The weight proportions of such a composition are: from 50 to 70% of polyamide, from 20 to 40% of polyolefin, from 2 to 10% of the prodegradant agent and from 0.2 to 2% of the compatibilization agent. Such a monofilament has oxo-biodegradability properties due to the material of the central portion but the outer portions have better mechanical properties than the central portion. Hence, the outer portions protect the central portion and also improve the cutting efficiency.

According to another embodiment, the monofilament comprises a central portion made of polylactic acid (PLA), and two outer portions made of PA6 or PA6-6/6. In this way, the main part of the monofilament has biodegradability properties (PLA being degradable under the action of water and/or enzymes) but the outer portions have better mechanical properties than the central portion.

According to another embodiment, the monofilament comprises a central portion made of a mixture of a polyamide and a polyolefin (e.g. a mixture of PA6 and PEHD) with less than 50% by weight of polyolefin including a compatibilization agent as described in patent application WO 2009/124593 in the name of the Applicant, and two outer portions made of PA6 or PA6-6/6 having greater mechanical properties than the central portion.

In addition, at least one of the portions may be made of a material reinforced by a filler, such as glass fibers, aramid or para-aramid polymer particles, or any other filler suitable for reinforcing the monofilament. For example, suitable para-aramid particles are sold by DuPont de Nemours under the name "Kevlar" (registered trade mark).

Indeed, as described in US patent 6,171,697 in the name of the Applicant, the incorporation of a small amount of aramid or para-aramid polymer particles, this amount possibly representing between 0.5% and 5% of the total mass, into a polyamide or copolyamide cutting filament effectively prevents the phenomenon of the line sticking in the cutting head. The incorporation of such particles also significantly increases the abrasion and wear resistance of the cutting filament, as has been demonstrated by tests which have shown a reduction of the order of at least 15% in the weight loss of the filament, compared with conventional cutting filament, under the same operating conditions.

The area of the cutting monofilament is typically equal to the area of a round monofilament having a diameter between 1.35 and 4 mm.

The cross-section of the monofilament is constant, meaning that in any position along the longitudinal axis of the monofilament, the cross-section has the same shape and dimensions and the portions 10, 11 and 12 are distributed within the cross-section in an identical way.

However, the position of each portion of the cross-section varies continuously along the longitudinal axis of the monofilament. In other words, each portion describes a helical path along of the longitudinal axis of the monofilament (see Fig. 1B and Fig. 2B).

According to an embodiment, the position of each portion of the cross-section varies relative to the longitudinal axis of the monofilament by a constant angle by unit of length of the monofilament.

The period of variation of the position of each portion of the cross-section relative to the longitudinal axis of the monofilament (i.e. the minimal distance according to the longitudinal axis between two cross-sections where each portion has the same position relative to the longitudinal axis) is typically greater than 40 mm.

Such a configuration of the monofilament may be obtained by using a rotating extrusion head comprising a die having the same cross-section as the monofilament. By same cross-section is meant that the cross-section of the die has the same shape as the cross-section of the monofilament. The dimension of the die cross-section may however be greater than the dimension of the monofilament cross-section in order to take into account a possible stretching of the monofilament after drawing it from the extrusion head.

The manufacturing process is the following.

The die is caused to rotate within the extrusion head.

The extrusion head is fed with a respective material of each of said at least two portions through at least two respective inlets so as to arrange, in a cross-section of the die, said at least two portions of the cross-section of the monofilament. The inlets are controlled in parallel to supply the different materials to the extrusion head.

The monofilament is then drawn from said die, the rotation of the die causing the position of each of said at least three portions to vary continuously along the longitudinal axis of the monofilament.

The monofilament may then be stretched, which has the effect of reducing the dimension of the cross-section of the final monofilament as compared to the dimension of the die cross-section. For example, the die cross-section may be about 6 to 7 times greater than the dimension of the final cross-section of the monofilament.

When the monofilament has a polygonal (e.g. square) cross-section, the rotation of the die also has the effect of twisting the monofilament along its longitudinal axis.

In such case, the angle of variation of each of the at least three portions of the cross-section is equal to the twisting angle of the monofilament. This implies that if a portion is arranged along a side of the cross-section, it will always keep this arrangement with respect to the cross-section, whatever the position along the longitudinal axis of the monofilament. This ensures that in any position along the longitudinal axis, a given portion of the cross-section always has the same chemical composition and mechanical properties.

The use of a rotating extrusion head allows obtaining a twisted monofilament without requiring any process step after drawing the monofilament from the extrusion head. The manufacturing process is thus simpler than the one described in patent US 5,687,482 and also avoids deforming the monofilament.

When the monofilament has a round cross-section, the rotation of the die does not affect the outer shape of the monofilament, which remains cylindrical, but also makes the position of the three portions vary along the longitudinal axis of the monofilament.

The period of variation of the position of each portion of the cross-section is determined by the rotation speed of the die: the speeder the die rotation the smaller the period of variation.

As compared to a monofilament made of a single mixture of different materials, the arrangement of portions made of different materials within the cross-section of the monofilament avoids the lack of homogeneity encountered with mixtures and thus allows more efficiently benefiting from the mechanical properties of each material. If necessary, adjacent portions may comprise a compatibilisation agent that promotes compatibility of the respective materials of said portions. The skilled person is able to select a suitable compatibilisation agent and to determine its proportion depending on the materials considered.

Although the monofilament of Figures 1A-1B and 2A-2B is illustrated with three portions, the invention encompasses embodiments comprising only two portions of different materials and embodiments comprising more than three portions of different materials.

The outer surface of the monofilament may also present striation along the longitudinal axis, that can be made after drawing the monofilament from the extrusion head.

### REFERENCES

US 5,687,482
US 6,171,697

## Claims

1. Cutting monofilament (1) for a vegetation cutting machine such as a brush cutter or an edge trimmer, having a constant cross-section constant along a longitudinal axis (X) of the monofilament, **characterized in that** the cross section comprises at least two portions (10, 11, 12) made of thermoplastic materials having different mechanical properties, wherein each of said portions (10, 11, 12) has a continuously varying position along said longitudinal axis of the monofilament and the arrangement of each portion relative to the cross-section is constant along said longitudinal axis.

2. Cutting monofilament according to claim 1, wherein the cross-section comprises at least three portions (10, 11, 12) arranged side by side within the cross-section of the monofilament (1).

3. Cutting monofilament according to one of claims 1 to 2, wherein the limit between two adjacent portions (10, 11, 12) in the cross-section of the monofilament is substantially linear.

4. Cutting monofilament according to one of claims 1 to 3, wherein the position of each portion (10, 11, 12) of the cross-section varies relative to the longitudinal axis (X) of the monofilament by a constant angle by unit of length of the monofilament (1).

5. Cutting monofilament according to claim 4, wherein the period of variation of the position of each portion (10, 11, 12) of the cross-section relative to the longitudinal axis (X) of the monofilament is greater than 40 mm.

6. Cutting monofilament according to one of claims 1 to 5, wherein the cross-section has a polygonal shape comprising from four to eight edges.

7. Cutting monofilament according to claim 6, having a square cross-section, wherein the portions (10, 11, 12) are arranged so as to form respective stripes parallel to a side of the cross-section.

8. Cutting monofilament according to one of claims 6 or 7, wherein the cutting monofilament (1) is twisted along its longitudinal axis and the angle of variation of the position of each portion (10, 11, 12) of the cross-section is equal to the twisting angle of the monofilament.

9. Cutting monofilament according to one of claims 1 to 5, wherein the cross-section has a round shape.

10. Cutting monofilament according to one of claims 1 to 9, wherein the area of the cross-section of the monofilament (1) is equal to the cross-section of a round monofilament having a diameter comprised between 1.35 and 4 mm.

11. Cutting monofilament according to one of claims 1 to 10, wherein at least one of the portions (10, 11, 12) comprises a polyamide or a copolyamide.

12. Cutting filament according to one of claims 1 to 11, wherein a portion of the cross-section comprises PA 6/6 and another portion of the cross-section comprises PA 6-6/6.

13. Cutting monofilament according to one of claims 1 to 12, wherein a portion of the cross-section comprises polylactic acid (PLA) or a mixture comprising a polyamide, a polyolefin and a prodegradant agent including a stearate of a transition metal.

14. Cutting filament according to one of claims 1 to 13, wherein at least one portion (10, 11, 12) of the cross-section comprises aramid or para-aramid polymer particles.

15. Process of manufacturing a cutting monofilament (1) according to one of claims 1 to 14, comprising:
- providing a rotating extrusion head comprising a die having the same cross-section as the monofilament (1) and causing said die to rotate;
- feeding said extrusion head with a respective material of each of the portions (10, 11, 12) of the cross-section of the monofilament, through respective inlets so as to arrange, in a cross-section of the die, said portions of the cross-section of the monofilament;
- drawing the monofilament (1) from said die, the rotation of the die causing the position of each portion (10, 11, 12) of the cross-section to vary continuously along the longitudinal axis (X) of the monofilament (1).

## Patentansprüche

1. Schneidendes Monofilament (1) für eine Vegetationsschneidmaschine, wie z. B. einen Buschräumer oder einen Kantenbeschneider, mit einem konstanten Querschnitt konstant entlang einer Längsachse (X) des Monofilaments, **dadurch gekennzeichnet, dass** der Querschnitt wenigstens zwei Abschnitte (10, 11, 12) umfasst, die aus thermoplastischem Material mit unterschiedlichen mechanischen Eigenschaften hergestellt sind, wobei jeder der genannten Abschnitte (10, 11, 12) eine kontinuierlich variierende Position entlang der genannten Längsachse des Monofilaments hat und die Anordnung jedes Abschnitts relativ zu dem Querschnitt konstant entlang der genannten Längsachse ist.

2. Schneidendes Monofilament gemäß Anspruch 1, wobei der Querschnitt wenigstens drei Abschnitte (10, 11, 12) umfasst, die Seite an Seite innerhalb des Querschnitts des Monofilaments (1) angeordnet ist.

3. Schneidendes Monofilament gemäß einem der Ansprüche 1 bis 2, wobei die Grenze zwischen zwei anliegenden Abschnitten (10, 11, 12) in dem Querschnitt des Monofilaments im Wesentlichen linear ist.

4. Schneidendes Monofilament gemäß einem der Ansprüche 1 bis 3, wobei die Position jedes Abschnitts (10, 11, 12) des Querschnitts relativ zu der Längsachse (X) des Monofilaments durch einen konstanten Winkel nach Längeneinheit des Monofilaments (1) variiert.

5. Schneidendes Monofilament gemäß Anspruch 4, wobei die Variationsperiode der Position jedes Abschnitts (10, 11, 12) des Querschnitts relativ zu der Längsachse (X) des Monofilaments größer ist als 40 mm.

6. Schneidendes Monofilament gemäß einem der Ansprüche 1 bis 5, wobei der Querschnitt eine vier bis acht Kanten umfassende polygonale Form hat.

7. Schneidendes Monofilament gemäß Anspruch 6 mit einem quadratischen Querschnitt, wobei die Abschnitte (10, 11, 12) derart angeordnet sind, dass jeweilige Streifen parallel zu einer Seite des Querschnitts geformt werden.

8. Schneidendes Monofilament gemäß einem der Ansprüche 6 oder 7, wobei das schneidende Monofilament (1) entlang seiner Längsachse verdrillt ist und der Variationswinkel der Position jedes Abschnitts (10, 11, 12) des Querschnitts gleich dem verdrillten Winkel des Monofilaments ist.

9. Schneidendes Monofilament gemäß einem der Ansprüche 1 bis 5, wobei der Querschnitt eine runde Form hat.

10. Schneidendes Monofilament gemäß einem der Ansprüche 1 bis 9, wobei der Bereich des Querschnitts des Monofilaments (1) gleich dem Querschnitt eines runden Monofilaments mit einem zwischen 1,35 und 4 mm inbegriffenen Durchmesser ist.

11. Schneidendes Monofilament gemäß einem der Ansprüche 1 bis 10, wobei wenigstens einer der Abschnitte (10, 11, 12) ein Polyamid oder ein Kopolyamid umfasst.

12. Schneidendes Monofilament gemäß einem der Ansprüche 1 bis 11, wobei ein Abschnitt des Querschnitts PA 6/6 umfasst und ein anderer Abschnitt des Querschnitts PA 6-6/6 umfasst.

13. Schneidendes Monofilament gemäß einem der Ansprüche 1 bis 12, wobei ein Abschnitt des Querschnitts Polymilchsäure (PLA) oder eine Mischung umfasst, umfassend ein Polyamid, ein Polyolefin und einen Vorläufer des Abbaumittels, das ein Stearat oder ein Übergangsmetall einschließt.

14. Schneidendes Filament gemäß einem der Ansprüche 1 bis 13, wobei wenigstens ein Abschnitt (10, 11, 12) des Querschnitts Aramid- oder Para-Aramidpolymerparktikel umfasst.

15. Verfahren zur Herstellung eines schneidenden Monofilaments (1) gemäß einem der Ansprüche 1 bis 14, umfassend:
- Bereitstellen eines rotierenden Extruderkopfes, der einen Düsenkopf mit demselben Querschnitt wie das Monofilament (1) umfasst und den genannten Düsenkopf zum Rotieren veranlasst;
- Versorgen des genannten Extruderkopfes mit einem jeweiligen Material jedes der Abschnitte (10, 11, 12) des Querschnitts des Monofilaments durch jeweilige Einlässe derart, dass in einem Querschnitt des Düsenkopfes die genannten Abschnitte des Querschnitts des Monofilaments angeordnet werden;
- Ziehen des Monofilaments (1) von dem genannten Düsenkopf, wobei die Rotation des Düsenkopfes die Position jedes Abschnitts (10, 11, 12) des Querschnitts zum kontinuierlichen Variieren entlang der Längsachse (X) des Monofilaments (1) veranlasst.

## Revendications

1. Monofilament de coupe (1) pour une machine de découpe de végétaux telle qu'une débroussailleuse ou un taille-bordures, ayant une section transversale constante qui est constante le long d'un axe longitudinal (X) du monofilament, **caractérisé en ce que** la section transversale comprend au moins deux parties (10, 11, 12) composées de matériaux thermoplastiques ayant des propriétés mécaniques différentes, dans lequel chacune desdites parties (10, 11, 12) a une position qui varie continûment le long dudit axe longitudinal du monofilament et l'agencement de chaque partie par rapport à la section transversale est constant le long dudit axe longitudinal.

2. Monofilament de coupe selon la revendication 1, dans lequel la section transversale comprend au moins trois parties (10, 11, 12) agencées côte à côte dans la section transversale du monofilament (1).

3. Monofilament de coupe selon 1"une des revendications 1 ou 2, dans lequel la limite entre deux parties adjacentes (10, 11, 12) dans la section transversale du monofilament est sensiblement linéaire.

4. Monofilament de coupe selon l'une des revendications 1 à 3, dans lequel la position de chaque partie (10, 11, 12) de la section transversale varie par rapport à l'axe longitudinal (X) du monofilament d'un angle constant par unité de longueur du monofilament (1).

5. Monofilament de coupe selon la revendication 4, dans lequel la période de variation de la position de chaque partie (10, 11, 12) de la section transversale par rapport à l'axe longitudinal (X) du monofilament est supérieure à 40 mm.

6. Monofilament de coupe selon l'une des revendications 1 à 5, dans lequel la section transversale a une forme polygonale comprenant de quatre à huit côtés.

7. Monofilament de coupe selon la revendication 6, ayant une section transversale carrée, dans lequel les parties (10, 11, 12) sont agencées de manière à former des bandes respectives parallèles à un côté de la section transversale.

8. Monofilament de coupe selon l'une des revendications 6 ou 7, dans lequel le monofilament de coupe (1) est torsadé le long de son axe longitudinal et l'angle de variation de la position de chaque partie (10, 11, 12) de la section transversale est égal à l'angle de torsion du monofilament.

9. Monofilament de coupe selon l'une des revendications 1 à 5, dans lequel la section transversale a une forme ronde.

10. Monofilament de coupe selon l'une des revendications 1 à 9, dans lequel la superficie de la section transversale du monofilament (1) est égale à la section transversale d'un monofilament rond ayant un diamètre compris entre 1,35 et 4 mm.

11. Monofilament de coupe selon l'une des revendications 1 à 10, dans lequel au moins une des parties (10, 11, 12) comprend un polyamide ou un copolyamide.

12. Monofilament de coupe selon l'une des revendications 1 à 11, dans lequel une partie de la section transversale comprend du PA 6/6 et une autre partie de la section transversale comprend du PA 6-6/6.

13. Monofilament de coupe selon l'une des revendications 1 à 12, dans lequel une partie de la section transversale comprend de l'acide polylactique (PLA) ou un mélange comprenant un polyamide, une polyoléfine et un agent pro-dégradant incluant un stéarate d'un métal de transition.

14. Monofilament de coupe selon l'une des revendications 1 à 13, dans lequel au moins une partie (10, 11, 12) de la section transversale comprend des particules polymères d'aramide ou de para-aramide.

15. Processus de fabrication d'un monofilament de coupe (1) selon l'une des revendications 1 à 14, comprenant :
- la fourniture d'une tête d'extrusion rotative comprenant une filière ayant la même section transversale que le monofilament (1) et amenant ladite filière à tourner ;
- l'acheminement dans ladite tête d'extrusion d'un matériau respectif de chacune des parties (10, 11, 12) de la section transversale du monofilament, à travers des entrées respectives de manière à agencer, dans une section transversale de la filière, lesdites parties de la section transversale du monofilament ;
- l'étirage du monofilament (1) à partir de ladite filière, la rotation de la filière amenant la position de chaque partie (10, 11, 12) de la section transversale à varier en continu le long de l'axe longitudinal (X) du monofilament (1).
